(19) **Europäisches Patentamt European Patent Office Office européen des brevets**

(11) **EP 2 208 271 B1**

(12) **EUROPEAN PATENT SPECIFICATION**

(45) Date of publication and mention of the grant of the patent:
**19.08.2015 Bulletin 2015/34**

(51) Int Cl.:
***H02H 3/33*** *(2006.01)*

(21) Application number: **08846765.9**

(86) International application number:
**PCT/EP2008/064607**

(22) Date of filing: **28.10.2008**

(87) International publication number:
**WO 2009/059912 (14.05.2009 Gazette 2009/20)**

(54) **ELECTRONIC PROTECTION DEVICE AGAINST EARTH LEAKAGE CURRENTS AND RELATED DETECTION PROCEDURE**

ELEKTRONISCHE VORRICHTUNG ZUM SCHUTZ GEGEN ERDSCHLUSSSTRÖME UND ERKENNUNGSVERFAHREN DAFÜR

DISPOSITIF DE PROTECTION ÉLECTRONIQUE CONTRE LES COURANTS DE FUITE DE TERRE ET PROCÉDÉ DE DÉTECTION ASSOCIÉ

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **09.11.2007 IT MI20072147**

(43) Date of publication of application:
**21.07.2010 Bulletin 2010/29**

(73) Proprietor: **ABB S.p.A.**
**20124 Milano (IT)**

(72) Inventors:
• **CURRA', Antonio**
  **I-20081 Abbiategrasso (MI) (IT)**
• **FARES, Antonio**
  **I-20146 Milano (IT)**

(74) Representative: **Giavarini, Francesco et al**
**Zanoli & Giavarini S.r.l.**
**Via Melchiorre Gioia, 64**
**20125 Milano (IT)**

(56) References cited:
**GB-A- 2 318 002**

**Description**

The present invention relates to an electronic protection device against earth leakage currents. In a further aspect, the present invention also refers to a procedure for detecting said leakage currents.

There are numerous known examples of electronic protection devices for protecting electric lines, particularly single-phase or three-phase low-voltage electric lines (i.e. for voltages below 1 kV), against earth leakage currents.

The main purpose of such devices is to ensure the interruption of an electric line whenever an earth leakage current exceeding a given preset threshold is detected.

Said electric line may be the power supply line to any electric load or any other local civil or industrial electrical utility.

The term "earth leakage current" is used to mean, for instance, any current circulating towards earth that is generated by a malfunction on the electric line or on any electric loads connected thereto.

Electronic protection devices of the known type generally comprise a current sensor that detects any residual current between one of the phase conductors and the neutral on the electric line.

The signal detected coming from the current sensor is sent as input to an electronic stage, which processes the incoming signal and generates a tripping signal if said residual current exceeds certain threshold values.

These threshold values are preset basing on generally accepted technical standards and they define the so-called tripping characteristic curve of the electronic protection device.

When the electronic stage generates a tripping signal, this signal is sent to a relay capable of interrupting the electric line.

In the more conventional electronic protection devices, the electronic stage comprises a plurality of electronic circuits with discrete components either printed or sometimes obtained using surface mount technologies (SMT) or application-specific integrated circuits (ASIC). The use of these technological solutions carries several disadvantages inasmuch as concerns the electronic stage, such as relatively high overall dimensions and power consumption. Another drawback lies in a naturally limited flexibility in the use of the electronic stage, given that its functionalities are necessarily restricted to its circuit structure.

Implementing diversified, additional or auxiliary functionalities, or introducing modifications to the tripping characteristic curves of the electronic protection device consequently demands the realisation of dedicated product lines, because the electronic stage must be modified at structural level case by case. This naturally entails an extra burden for the global costs in the industrial production of the electronic protection devices.

The state of the art has recently seen the introduction of digital processing-devices (particularly of microcontrollers) in the electronic stage of the electronic protection devices.

In principle, the presence of a microcontroller naturally affords a greater flexibility in use for the electronic stage, especially inasmuch as concerns the potential for implementing auxiliary functionalities or dedicated functions for a given user.

The British patent application GB2318002A, for instance, describes an electronic protection device with a tripping characteristic curve that can be adapted to the load conditions on the electric line thanks to the use of a microcontroller.

Unfortunately, these more recently developed electronic protection devices still have several drawbacks.

The algorithms commonly used to process the data recorded by the current sensor are somewhat complex and cumbersome because, in order to determine whether or not the given conditions demand a tripping manoeuvre, they must repeatedly calculate one or more specific electrical quantities (e.g. the root mean square value) relating to the detected residual current. It has been proven that performing these algorithms demands a relatively high calculation power in order to guarantee an optimal performance of the electronic protection device, especially in terms of tripping times.

The need to have such a calculation power available implicitly means an increase in the costs of the microcontroller and, more in general, of industrially producing the electronic stage. These costs can be high enough to significantly influence the total cost of the electronic protection device.

The use of high-performance microcontrollers also implies relevant electric power consumptions and overall dimensions for the electronic stage as a whole.

Finally, the use of complex processing algorithms makes it difficult to significantly reduce the tripping times, where necessary, as in the case of particularly high leakage currents.

The main aim of the present invention is to produce an electronic protection device against earth leakage currents in a low-voltage electric line that enables the above-described drawbacks to be overcome.

Within the scope of this main aim, another object of the present invention is to provide an electronic protection device that offers a considerable flexibility in use, especially inasmuch as concerns the electronic stage, depending on the installation requirements.

Another object of the present invention is to provide an electronic protection device with a reduced power consumption and overall dimensions, especially inasmuch as concerns the electronic stage.

Another object of the present invention is to provide an electronic protection device that is easy to manufacture on an industrial scale at more competitive costs than the devices of the known state of the art.

The above main aim and objects, as well as other objects that will become apparent from the following description and attached drawings, are achieved according to the invention by an electronic protection device against earth leakage currents in a low-voltage electric line according to the following claim 1.

In a further aspect, the present invention also refers to a procedure for detecting said earth leakage currents, according to the following claim 13.

The electronic protection device, according to the invention, comprises digital processing means capable of acquiring a series of samples indicative of a residual current between at least one pair of conductors on an electric line.

Said processing means comprise computerised means for executing a digital processing procedure on the acquired samples in order to obtain information on the period and amplitude dynamics of said series of samples.

In particular, the amplitude dynamics of the above-mentioned series of samples is analysed with respect to a preset reference value, preferably indicative of a null residual current.

A control logic signal is generated basing on the information obtained by means of the aforesaid digital processing procedure.

Such a digital processing procedure offers the advantage of being particularly concise and straightforward to execute, since it is based on a recurrent use of preset processing procedures. Thanks to the above-mentioned processing procedure, in standard situations the processing means calculate a few simple quantitative values indicative of the instantaneous trend of the residual current, so as to be thereby able to assess whether the conditions demand a tripping manoeuvre.

In situations that are particularly critical for the electric line, on the other hand, these processing means are capable of generating a logic tripping signal within a relatively short time.

The calculations completed by means of the aforesaid procedure are particularly simple and require no significant resources in terms of available memory.

It is consequently unnecessary for said processing means to be provided with a high calculation power, and this has considerable benefits in terms of reducing the industrial costs, the power dissipation and the overall size of the electronic protection device, particularly as regards the electronic stage.

As explained in more detail later on, the electronic protection device according to the invention is easy to manufacture industrially, and at much more limited costs than the devices of the known state of the art.

Further characteristics and advantages of the present invention will emerge more clearly from the description given below, referring to the attached figures, which are given as a non-limiting example, wherein:

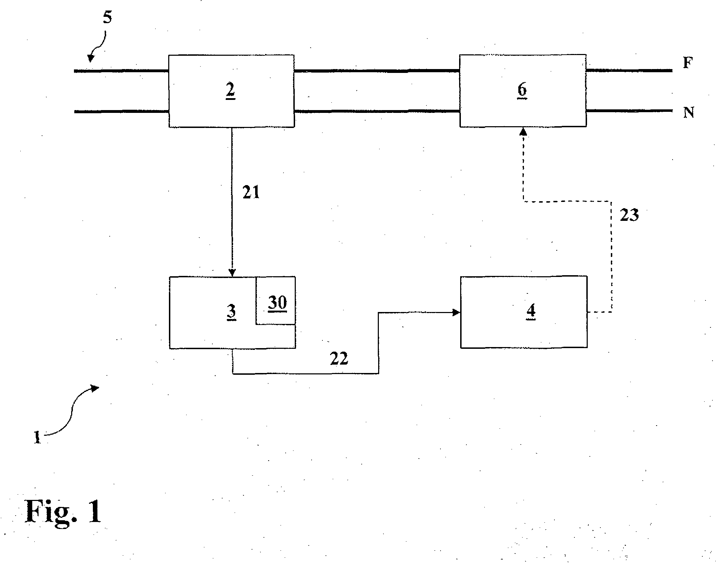

- figure 1 schematically illustrates the structure of the electronic protection device according to the present invention; and

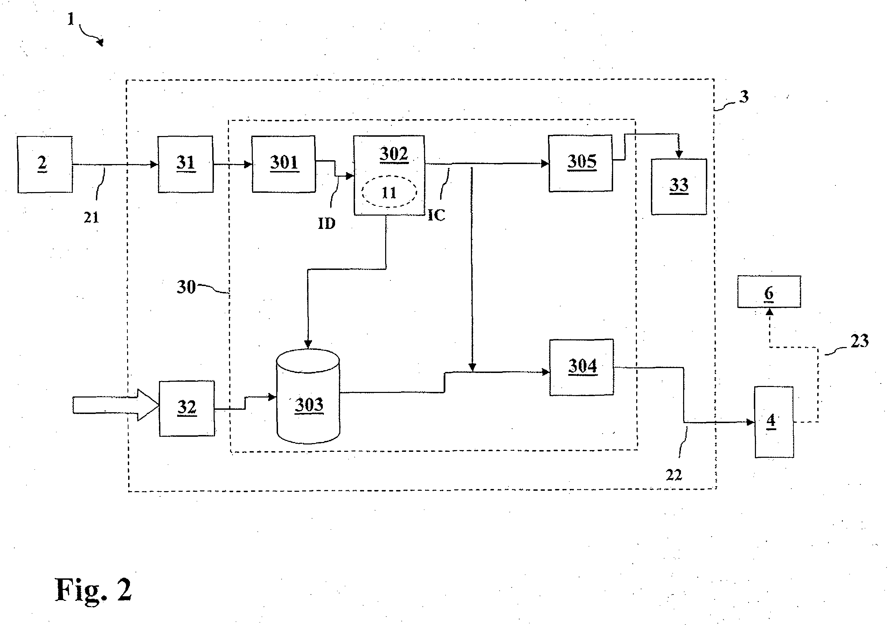

- figure 2 schematically illustrates the structure of a portion of the electronic protection device of figure 1;

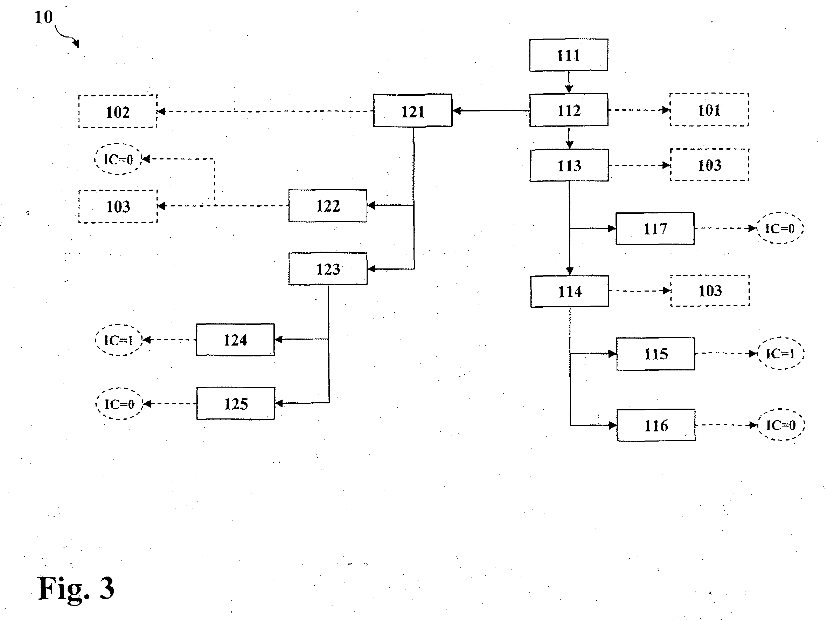

- figure 3-4, 5A-5C schematically show the phases of a digital processing procedure used by the electronic protection device of figure 1, in a preferred embodiment.

With reference to the above-mentioned figures, the present invention concerns an electronic protection device 1 for protecting an electric line 5 against earth leakage currents.

The electronic device 1 comprises a pair of contacts 6, suitable for mutually coupling with and separating from one another. When the contacts 6 are separated, the electric line 5 to which they are connected is interrupted.

The electronic protection device 1 comprises sensor means 2 for recording any residual current between at least one pair of conductors (F, N) on the electric line 5.

It is common knowledge that the above-mentioned residual current may serve as an indirect indication of any earth leakage currents towards earth.

According to a preferred embodiment, the sensor means 2 comprise at least one current transformer equipped with a primary winding comprising the conductors (F, N) of the electric line 5. The sensor means 2 thus generate an output signal 21 indicative of the instantaneous trend of the aforesaid residual current.

The electronic protection device 1 comprises electronic means 3, electrically connected to the sensor means 2 for generating a tripping output signal 22, based on the trend of the aforesaid residual current.

The electronic protection device 1 also comprises actuating means 4, comprising a relay, for instance, which is capable of performing (reference 23) the separation of the contacts 6 on the basis of the tripping signal 22, thereby interrupting the electric line 5.

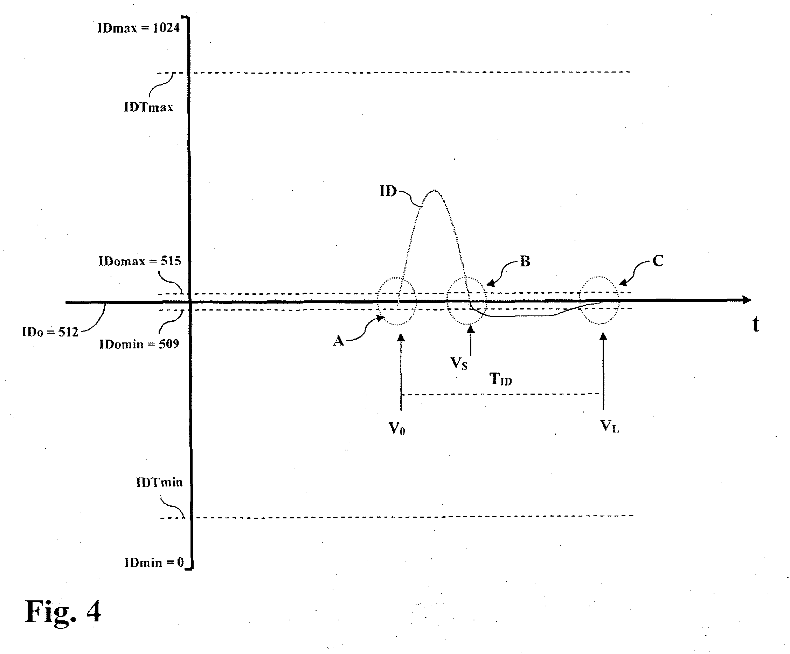

As mentioned previously, the electronic means 3 receive as input the sense signal 21, which is not necessarily of the sine wave type, but may vary in both amplitude and frequency. For instance (see figure 4), the signal 21 could consist of a split wave with a variable period and amplitude (and splitting angle).

The electronic means 3 can advantageously comprise an input circuit block 31 comprising electronic filter circuits of conventional type to eliminate high-frequency wave components overlapping the sense signal 21.

The electronic means 3 are complete with digital processing means 30, e.g. a microcontroller, that comprise first and second computerised means 301-302, respectively comprising one or more programmes and/or modules, and/or routines, and/or software instructions, for instance, that can be implemented by the microcontroller 30.

The first computerised means 301 are suitable for completing an analog-to-digital conversion of the signal 21 so as to obtain a series of samples ID, indicative of the instantaneous trend of the residual current recorded by the sensors 2.

Before it is sampled by the first computerised means 301, the signal 21 is preferably suitably amplified by suitable amplification means (not shown) integrated on board the microcontroller 30.

The second computerised means 302 are designed to perform a processing procedure 10 on the samples $V_N$ in the series ID.

According to the processing procedure 10, each sample $V_N$ is preferably expressed by a binary number with *n* bit.

Said representation implies that the amplitude dynamics of the series ID has a preset resolution that depends substantially on the number of bits used to express each sample $V_N$. For example, using binary numbers with 10 bits, the dynamics of the series ID can be expressed according to $2^{10}=1024$ possible levels, obviously coming between a minimum level $ID_{min}=0$ and a maximum level $ID_{max}=1024$. It should be noted that $ID_{min}$ and $ID_{max}$ represent not limit values with their own physical significance, but only the extremes of a set of discrete values by means of which each sample $V_N$ can be represented.

Since the sense signal 21, indicative of the residual current detected, can naturally acquire both positive and negative values, each of the samples $V_N$ is advantageously expressed in relation to a reference value $ID_0$, that is advantageously positioned midway along the range $[ID_{max}, ID_{min}]$. Said reference value $ID_0$ is indicative of a residual current of nil. Basically, $ID_0$ represents the binary number with which the samples $V_N$ would be represented if the residual current were nil. In a 10-bit representation of the samples $V_N$, we shall have $ID_0=512$.

The processing procedure 10 is executed by the microcontroller 30 in order to obtain information 11 relating to the duration of an instantaneous period $T_{ID}$ and to the amplitude dynamics of the series ID, by comparison with $ID_0$.

The information 11 thus obtained is substantially indicative of whether or not it is necessary to execute a protective tripping manoeuvre.

Basing on this information, therefore, the second computerised means 302 generate a control logic signal IC. The signal IC can advantageously acquire a logical state corresponding to 1 (tripping) in the event of it proving necessary for the electronic device 1 to complete a protective manoeuvre, or a logical state corresponding to 0 (no-tripping) if no need for a protective manoeuvre is identified.

For the proper processing of the above information 11, the procedure 10 advantageously includes the identification of one or more relevant samples inasmuch as concerns the series ID. More in detail:

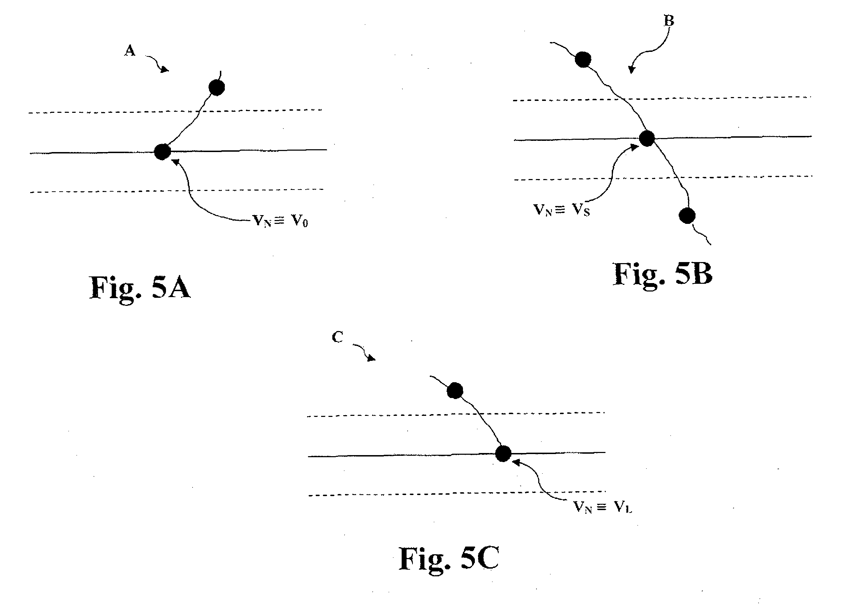

start-of-period sample $V_0$ (reference A, figures 4-5):

this sample is indicative of a first passage through the zero of the residual current recorded. In other words, it constitutes the sample starting from which the second computerised means 302 implement the procedure 10. The samples preceding $V_0$ are not used to instantaneously determine the instantaneous period $T_{ID}$ in question and the ID amplitude dynamics in said period;

semi-period sample $V_s$ (reference B, figures 4-5): this is the sample indicative of a second passage of the residual current through the zero. It consequently enables the end of the first semi-period in the series ID to be identified;

end-of-period sample $V_L$ (reference C, figures 4-5): this sample is indicative of a third passage of the residual current through the zero, enabling the instantaneous period $T_{ID}$ in the series ID to be determined.

The processing procedure 10 preferably uses one or more preset processing procedures, each of which is suitable for implementing several simple processing operations on the samples $V_N$. For the sake of simplicity, these processing procedures are now described in detail below.

First comparative procedure 101: this procedure is designed to verify whether a sample $V_N$ is indicative of a passage through the zero of the residual current recorded by the sensors 2. Given a certain sample $V_N$, the procedure 101 verifies whether or not it comes within a preset first significant range on either side of the reference value $ID_0$. Said range is used to allow for any errors introduced by the necessarily limited resolution of the binary representation used for the series of samples ID. In a 10-bit representation of the samples $V_N$, said range may vary, for instance, between the preset values $ID_{0max}=515$ arid $ID_{0max}=509$.

It should be noted that the procedure 101 enables the identification of the previously mentioned notable samples Vo, $V_S$ and $V_L$, simply by counting how many times the series ID passes through the zero within the time interval $T_{ID}$.

Second comparative procedure 102: this procedure is designed to verify whether or not a sample $V_N$ comes within a second preset range, coming between two preset limit values $ID_{Tmax}$ and $ID_{Tmin}$. Said limit values are indicative of the instantaneous maximum (positive or negative) amplitude allowable for the residual current detected. A sample $V_N$, which does not come within said range ($ID_{Tmax}$ - $ID_{Tmin}$), indicates the potential presence of a critical fault on the electric line 5. Said fault may require a rapid tripping of the protection device 1.

Third calculation procedure 103: this procedure is designed to establish an incremental value $\sum_N^2$ relating to a given sample $V_N$. Said incremental value is given by the formula $\sum_N{}^2 = \sum_{i=0}^{i=N} V_i{}^2$, i.e. by the sum of the square roots of a number N of samples, counted starting from the sample at the beginning of the period $V_0$. In other words, given a certain sample $V_N$, the procedure 103 calculates its square root and adds this to the sum of the square roots of the previous samples $V_{N-1}, V_{N-2}, \ldots V_0$.

The procedure 103 is also designed to determine a screening value $RMS^2$ relating to the instantaneous period $T_{ID}$. The quantity $RMS^2$ is preferably calculated starting from the incremental value $\Sigma_L^2$ relating to the end-of-period sample $V_L$ and is given by the formula

$$RMS^2 = \frac{\Sigma_L^2}{L}$$ , where L is the number of samples required in the period $T_{ID}$ starting from $V_0$.

The processing procedure 10 is now described in detail.

The processing procedure 10 is completed for each sample $V_N$ coming between the instants when the samples are acquired at the start and end of the period $V_0$ and $V_L$. Thus, since the period $T_{ID}$ of the series ID can vary continuously, we are sure of always having an initial reference for determining its "run-time".

Initially, the procedure 10 involves a step 111 for acquiring a sample $V_N$ (N >=0, N<=L) and a step 112 for implementing the comparison procedure 101 on the sample $V_N$ thus acquired.

If the sample $V_N$ comes within said first range ($ID_{0max}$ - $ID_{0min}$), it is indicative of a residual current amounting to nil.

The information 11 thus obtained includes the following:

- the electric line 5 is not in a particularly critical situation that might potentially demand the tripping of the protection device 1 immediately (or rather, before the end of the period $T_{ID}$). The procedure 10 then involves the step 113 wherein it uses the calculation procedure 103 to calculate the incremental value $\Sigma_N^2$ relating to said sample $V_N$.

If $V_N \equiv V_L$, i.e. if we are at the end of a period in the series ID, the procedure 10 includes a step 114 for using the calculation procedure 103 to calculate the screening value $RMS^2$ relating to the period $T_{ID}$ that has just elapsed.

If $RMS^2$ exceeds a preset threshold value (depending on the tripping characteristic curve of the protection device 1), the following information 11 is obtained:

- the residual current is indicative of the presence of earth leakage currents, and not of current spikes or noise overlapping the line current; and
- said earth leakage currents have acquired an unacceptable value within the period $T_{ID}$, based on the tripping characteristic curve of the protection device 1.

There is consequently a fault on the electric line 5.

The procedure 10 then calls for a step 115 to generate a tripping control logic signal (IC=1).

If $RMS^2$ does not exceed said preset threshold value, then the information 11 obtained is as follows:

- there are negligible or allowable earth leakage currents, based on the tripping characteristic curve of the protection device 1.

As a logical consequence, in this case, the procedure 10 generates a no-tripping control logic signal (IC=0) and goes on to complete the processing procedure 10 on the next sample $V_{N+1}$.

On the other hand, if $V_N \neq V_L$, i.e. if the sample $V_N$ is not indicative of a third passage of the residual current through the zero, so we are not at the end of the period $T_{ID}$, the procedure 10 includes a step 117 that generates a no-tripping control logic signal (IC=0). Then, it executes the processing procedure 10 for the next, new sample $V_{N+1}$.

In fact, further data are needed to enable us to establish whether or not the leakage currents are beyond the allowable levels.

Returning now to the above-described step 112, if the sample $V_N$ does not come within the first range ($ID_{0max}$ - $ID_{0min}$), the procedure 10 involves the step 121, which implements the comparative procedure 102 to ascertain whether the sample $V_N$ is indicative of a particularly critical situation on the electric line 5, severe enough to demand an immediate tripping manoeuvre.

The situation is not critical if the sample $V_N$ comes within the second preset range ($ID_{Tmax}$ - $ID_{Tmin}$).

Here again, further data are needed in order to assess whether or not the earth leakage currents are allowable.

The procedure 10 therefore includes the step 122 for implementing the calculation procedure 103, to generate a no-tripping control logic signal (IC=0) and then execute the procedure 10 on a new sample $V_{N+1}$.

If the sample $V_N$ does not come within the second preset range of values ($ID_{Tmax}$ - $ID_{Tmin}$), this might be indicative of a potentially critical situation or it might be due to a disturbance. The procedure 10 then implements a step 123 to memorise the sample $V_N$.

If $V_N$ is the Pth sample memorised and P is greater than a preset threshold number, then procedure 10 includes a step 124 for generating a tripping control logic signal.

In this case, in fact, $V_N$ would constitute the last of a series of samples indicative of a critical earth leakage current.

Vice versa, if it constitutes the Pth sample memorised, where P is smaller than the aforesaid preset threshold number, then the procedure 10 involves a step 125, which generates a no-tripping control logic signal not and to repeat the procedure 10 on a new sample $V_{N+1}$

Further information needs to be acquired in order to verify whether the situation coincides with very high leakage currents.

In a preferred embodiment, the procedure 10 also influences the implementation of the above-described steps 124-125, so as to prevent any untimely tripping manoeuvres on the part of the protection device 1.

There may therefore advantageously be a further step (not shown) involving a preliminary check, for a preset waiting time, to establish whether at least one sample indicative of a second passage of the residual current through the zero was acquired after $V_N$.

In other words, the completion of steps 124-125 can also be made subject to the identification, within said preset time interval, of a subsequent sample $V_K$ (K>N), indicative of a second passage of the residual current through the zero ($V_K \equiv V_S$).

If the sample $V_K \equiv V_S$ is identified, then the above-described step 124 is implemented; if not, the procedure 10 can move on to the alternative step 125.

In a further embodiment (not shown), if the sample $V_N$ does not come within the second preset range of values ($ID_{Tmax}$ - $ID_{Tmin}$), the procedure 10 might involve several alternative steps that differ from those described above.

For instance, there could be a step to calculate the incremental value $\Sigma_N^2$ relating to the aforesaid sample $V_N$, by means of the calculation procedure 103.

Then there could be a step for generating a tripping control logic signal if the incremental value $\Sigma_N^2$ exceeds a preset threshold or, in the opposite case, a step to generate a no-tripping control logic signal.

Other variants are naturally feasible.

For instance, according to another alternative embodiment, in order to satisfy certain installation requirements, the procedure 10 could include a step of generating a control signal to prompt a tripping manoeuvre as soon as it becomes apparent that the sample $V_N$ does not come within a second preset range of values ($ID_{Tmax}$ -$ID_{Tmin}$).

It is also advantageously possible to provide complementary and/or auxiliary computerised means in addition to those described above, again advantageously comprising programs and/or modules, and/or routines, and/or software instructions that can be implemented by the microcontroller 30.

The microcontroller 30 preferably also comprises third computerised means 303 designed to memorise data or information. For instance, these third computerised means 103 can be used to save the threshold/reference values/numbers needed to complete the procedure 10.

In a preferred embodiment of the present invention, the microcontroller 30 also comprises fourth computerised means 304 suitable for generating an output tripping signal 22 to send to the actuating means 4, based on the logical state of the control signal IC. Of course, the actuating means are enabled in the case of a signal to prompt a tripping manoeuvre (IC=1). The microcontrollor 30 can also include fifth computerised means 305, designed to perform accessory functions, such as to govern alarm and signal circuit blocks 33, for instance, according to known methods.

The above-mentioned fourth and fifth computerised means are preferably operated so that they are enabled only when strictly necessary, in order to further contain the power consumption of the microcontroller 30.

The electronic means 3 can also include further circuit blocks in addition to those already described.

For instance, it may be advantageous to include a further input circuit block 32, using electronic circuits of known type, for the user to use to send data and information to be saved by the microcontroller 30, such as the threshold/reference values to use in the implementation of the procedure 10, and so on.

From the above description it is clear that, in a further aspect, the present invention also refers to a procedure for detecting earth leakage currents in a low-voltage electric line 5.

This detection procedure includes a phase (a) for acquiring a sense signal 21, indicative of a residual current between a pair of conductors (phase and neutral).

This is followed by a phase (b) for performing an analog-to-digital conversion of the sense signal 21, so as to obtain a series of samples ID.

Then comes a phase (c) for implementing the digital processing procedure 10 on the series of samples ID to obtain the information 11 needed to establish whether or not to interrupt the electric line 5.

It has been demonstrated in a practical application that the electronic protection device 1 according to the present invention serves the purpose and achieves the objects as previously stated.

The protection device 1 relies on a processing procedure 10 characterised by a considerable simplicity and flexibility in operation.

This enables a drastic reduction in the number of product lines needed to cover a great variety of installation requirements.

Moreover, it is no longer necessary to provide for high calculation powers, with a drastic corresponding reduction in the power consumption and costs of the microcontroller 30.

The tripping times of the protection device 1 can be reduced selectively to cope with particularly critical situations. The same methods for tripping the protection device 1 can be modified according to needs, e.g. by memorising new reference values by means of a straightforward download procedure, or by downloading new procedures or software modules to enable it to be adapted effectively to the needs of a given installation.

All the above features clearly carry considerable benefits inasmuch as concerns the installation of the protection device 1 and the containment of the costs of its manufacture on an industrial scale.

The electronic protection device according to the invention, or the correlated detection procedure, can be practically implemented in different embodiments from those described above.

Based on the description provided herein, other characteristics, modifications or improvements are also feasible and self-evident to a person skilled in the art depending, for instance, on the hardware/software resources available.

Said characteristics, modifications or improvements consequently come within the scope of the present invention.

**Claims**

1. An electronic protection device (1) against earth leakage faults in a low-voltage electric line (5), comprising:

   - at least one pair of electric contacts (6), electrically connected to said electric line and suitable for being mutually coupled with or separated from one another; and
   - sensor means (2) for detecting a residual current between at least a pair of conductors (phase and neutral) on said electric line, and for generating a sense signal (21), indicative of the instantaneous trend of said residual current; and
   - electronic means (3), electrically connected to said sensor means, for generating an output tripping signal (22) on the basis of the trend of said residual current; and
   - actuating means (4) for separating said electric contacts on the basis of said output tripping signal, thereby interrupting said electric line;
   **characterised in that** said electronic means comprise digital processing means (30) including at least:
   - first computerised means (301) for performing an analog-to-digital conversion of said sense signal, so as to obtain a series (ID) of samples ($V_N$), indicative of the instantaneous trend of said residual current; and
   - second computerised means (302) for executing a digital processing procedure (10) on said samples ($V_N$) to obtain information (11) on the period of said series of samples and on the amplitude dynamics of said series of samples with respect to a preset reference value ($ID_0$), a control logic signal (IC) being generated on the basis of the information acquired by means of said processing procedure.

2. An electronic protection device according to claim 1, **characterised in that** said digital processing procedure comprises a first comparative procedure (101) for ascertaining whether a sample ($V_N$) comes within a preset first range of values ($ID_{0max}$ - $ID_{0min}$) indicative of the passage of said residual current through the zero.

3. An electronic protection device according to one or more of the previous claims, **characterised in that** said processing procedure comprises a second comparative procedure (102) for verifying whether a sample ($V_N$) comes within a preset second range of values ($ID_{Tmax}$ - $ID_{Tmin}$) indicative of a maximum allowable amplitude for said residual current.

4. An electronic protection device according to one or more of the previous claims, **characterised in that** said processing procedure comprises a third calculation procedure (103) for determining an incremental value ($\Sigma_N{}^2$), related to a sample ($V_N$), said incremental value corresponding to the sum of the square roots of the acquired samples, counted starting from a first sample ($V_0$) indicative of a first passage of said residual current through the zero.

5. An electronic protection device according to claim 4, **characterised in that** said third calculation procedure determines a screening value ($RMS^2$) related to a period ($T_{ID}$) of said series (ID) of samples ($V_N$), said screening value being, calculated on the basis of said incremental value.

6. An electronic protection device according to the previous claims, **characterised in that** said processing procedure comprises the following steps:

   - acquiring (111) a sample ($V_N$) from said series of samples; and
   - executing (112) said first comparative procedure (101).

7. An electronic protection device according to claim 6, **characterised in that** said processing procedure comprises the following steps:

   - if said sample $V_N$ comes within said first preset range of values ($ID_{0max}$- $ID_{0min}$), calculating (113) the incremental value $\Sigma_N{}^2$ related to said sample ($V_N$) by means of said first calculation procedure; and
   - if said sample ($V_N$) is indicative of a third passage of said residual current through the zero, calculating (114) the screening value $RMS^2$ related to said sample ($V_N$) by means of said first calculation procedure; or
   - if said sample $V_N$ is not indicative of a third passage of said residual current through the zero, generating (117) a no-tripping control logic signal and executing said processing procedure on a new sample $V_{N+1}$.

8. An electronic protection device according to claim 7, **characterised in that** said processing procedure comprises the following steps:

if said screening value *RMS*$^2$ exceeds a preset threshold value, generating (115) a tripping control logic signal; or
- if said screening value *RMS*$^2$ does not exceed said preset threshold value, generating (116) a no-tripping control logic signal and executing said processing procedure on a new sample $V_{N+1}$.

9. An electronic protection device according to claim 6, **characterised in that** said processing procedure comprises the following steps:

- if said sample $V_N$ does not come within said first preset range of values ($ID_{0max}$ - $ID_{0min}$), executing (121) said second comparative procedure (102).

10. An electronic protection device according to claim 9, **characterised in that** said processing procedure comprises the following steps:

- if said sample ($V_N$) does not come within said second preset range of values ($ID_{Tmax}$ - $ID_{Tmin}$), memorising (123) said sample ($V_N$); and
- if said sample ($V_N$) is the P$^{th}$ sample memorised and P is a number equal or grater than a preset threshold number, generating (124) a tripping control logic signal; or
- if said sample ($V_N$) is the P$^{th}$ sample memorised and P is a number smaller than said preset threshold number, generating (125) a no-tripping control logic signal and then repeating said processing procedure on a new sample $V_{N+1}$.

11. An electronic protection device according to claim 10, **characterised in that** said processing procedure also involves a step of checking in advance, for a preset waiting time, whether a sample indicative of a second passage of said residual current through the zero has been acquired after said sample ($V_N$).

12. An electronic protection device according to claim 9, **characterised in that** said processing procedure comprises the following steps:

- if said sample ($V_N$) comes within said second preset range of values (103), executing said third calculation procedure, generating (122) a no-tripping control logic signal and executing said processing procedure on a new sample $V_{N+1}$.

13. A procedure for detecting earth leakage currents in a low-voltage electric line (5), **characterised in that** it comprises the following phases:

a) acquiring a sense signal (21) indicative of a residual current between at least a pair of conductors on said electric line; and
b) executing an analog-to-digital conversion of said sense signal in order to obtain a series (ID) of samples ($V_N$) indicative of the instantaneous trend of said residual current; and
c) executing a digital processing procedure (10) on said series (ID) of samples ($V_N$) to obtain information (11) on the period of said series of samples and on the amplitude dynamics of said series of samples, with respect to a preset reference value ($ID_0$).

**Patentansprüche**

1. Elektronische Schutzvorrichtung (1) gegen Erdschlüsse in einer Niederspannungsstromleitung (5), aufweisend:

• Zumindest ein Paar elektrischer Kontakte (6), die elektrisch mit der Stromleitung verbunden sind und geeignet sind, jeweils miteinander verbunden zu werden oder voneinander getrennt zu werden; und
• eine Sensoreinrichtung (2) zum Erfassen eines Reststroms zwischen zumindest einem Paar von Leitern (Phase und Neutral) auf der Stromleitung, und zum Erzeugen eines Sensorsignals (21), das den derzeitigen Trend des Reststroms anzeigt; und
• eine elektronische Einrichtung (3), die elektrisch mit der Sensoreinrichtung verbunden ist, zum Erzeugen eines Ausgangsauslösesignals (22) auf der Grundlage des Trends des Reststroms; und
• eine Erregungseinrichtung (4) zum Trennen der elektrischen Kontakte auf der Grundlage des Ausgangsauslösesignals, wodurch die Stromleitung unterbrochen wird;
**dadurch gekennzeichnet, dass** die elektronische Einrichtung eine digitale Verarbeitungseinrichtung 830) aufweist, die zumindest Folgendes enthält:
• eine erste rechnergestützte Einrichtung (301) zum Durchführen einer Analog-Digital-Wandlung des Sensorsignals, um eine Reihe (ID) von Proben ($V_N$) zu erhalten, aus denen der derzeitige Trend des Reststroms hervorgeht; und
• eine zweite rechnergestützte Einrichtung (302) zum Ausführen eines Digitalverarbeitungsvorgangs (10) mit den Proben ($V_N$), um Informationen (11) über die Periode der Reihe von Proben und über die Amplitudendynamik der Reihe von Proben mit Bezug auf einen voreingestellten Referenzwert ($ID_0$) zu erhalten, wobei auf der Grundlage der durch den Verarbeitungsvorgang erhaltenen Informationen ein Steuerlogiksignal (IC) erzeugt wird.

2. Elektronische Schutzvorrichtung nach Anspruch 1, **dadurch gekennzeichnet, dass** der Digitalverarbeitungsvorgang einen ersten Vergleichsvorgang (101) aufweist, um zu bestimmen, ob sich eine Probe ($V_N$) in einem voreingestellten ersten Bereich von Werten ($ID_{0max}$ - $ID_{0min}$) befindet, der den Durchgang des Reststroms durch Null anzeigt.

3. Elektronische Schutzvorrichtung nach einem oder mehreren der vorgenannten Ansprüche, **dadurch gekennzeichnet, dass** der Verarbeitungsvorgang einen zweiten Vergleichsvorgang (102) aufweist, um festzustellen, ob sich eine Probe ($V_N$) in einem voreingestellten zweiten Bereich von Werten ($ID_{Tmax}$ - $ID_{Tmin}$) befindet, der eine maximal zulässige Amplitude für den Reststrom anzeigt.

4. Elektronische Schutzvorrichtung nach einem oder mehreren der vorgenannten Ansprüche, **dadurch gekennzeichnet, dass** der Verarbeitungsvorgang einen dritten Berechnungsvorgang (103) aufweist, um einen inkrementalen Wert ($\Sigma_N^2$) zu bestimmen, der sich auf eine Probe ($V_N$) bezieht, wobei der inkrementale Wert der Summe der Quadratwurzeln der erhaltenen Proben entspricht, wobei ausgehend von einer ersten Probe ($V_0$) gezählt wird, die einen ersten Durchgang des Reststroms durch Null anzeigt.

5. Elektronische Schutzvorrichtung nach Anspruch 4, **dadurch gekennzeichnet, dass** der dritte Berechnungsvorgang einen Screeningwert ($RMS^2$) bestimmt, der sich auf eine Periode ($T_{ID}$) der Reihe (ID) von Proben ($V_N$) bezieht, wobei der Screeningwert auf der Grundlage des inkrementalen Werts berechnet wird.

6. Elektronische Schutzvorrichtung nach den vorgenannten Ansprüchen, **dadurch gekennzeichnet, dass** der Verarbeitungsvorgang die folgenden Schritt aufweist:

   • Erhalten (111) einer Probe ($V_N$) aus der Reihe von Proben; und
   • Ausführen (112) des ersten Vergleichsvorgangs (101).

7. Elektronische Schutzvorrichtung nach Anspruch 6, **dadurch gekennzeichnet, dass** der Verarbeitungsvorgang die folgenden Schritte aufweist:

   • falls sich die Probe $V_N$ in dem ersten voreingestellten Bereich von Werten ($ID_{0max}$ - $ID_{0min}$) befindet, Berechnen (113) des inkrementalen Werts $\Sigma_N^2$, der sich auf die Probe ($V_N$) bezieht, mithilfe des ersten Berechnungsvorgangs; und
   • falls die Probe ($V_N$) einen dritten Durchgang des Reststroms durch Null anzeigt, Berechnen (114) des Screeningwerts $RMS^2$, der sich auf die Probe ($V_N$) bezieht, mithilfe des ersten Berechnungsvorgangs; oder
   • falls die Probe ($V_N$) nicht einen dritten Durchgang des Reststroms durch Null anzeigt, Erzeugen (117) eines Nichtauslösesteuerlogiksignals und Ausführen des Verarbeitungsvorgangs mit einer neuen Probe $V_{N+1}$.

8. Elektronische Schutzvorrichtung nach Anspruch 7, **dadurch gekennzeichnet, dass** der Verarbeitungsvorgang die folgenden Schritte aufweist:

   • falls der Screeningwert $RMS^2$ einen voreingestellten Schwellenwert überschreitet, Erzeugen (115) eines Auslösesteuerlogiksignals; oder
   • falls der Screeningwert $RMS^2$ den voreingestellten Schwellenwert nicht überschreitet, Erzeugen (116) eines Nichtauslösesteuerlogiksignals und Ausführen des Verarbeitungsvorgangs mit einer neuen Probe $V_{N+1}$.

9. Elektronische Schutzvorrichtung nach Anspruch 6, **dadurch gekennzeichnet, dass** der Verarbeitungsvorgang die folgenden Schritte aufweist:

   • falls sich die Probe $V_N$ nicht in dem ersten voreingestellten Bereich von Werten ($ID_{0max}$ - $ID_{0min}$) befindet, Ausführen (121) des zweiten Vergleichsvorgangs (102).

10. Elektronische Schutzvorrichtung nach Anspruch 9, **dadurch gekennzeichnet, dass** der Verarbeitungsvorgang die folgenden Schritte aufweist:

   • falls sich die Probe $V_N$ nicht in dem ersten voreingestellten Bereich von Werten ($ID_{Tmax}$ - $ID_{Tmin}$) befindet, Speichern (123) der Probe ($V_N$); und
   • falls die Probe ($V_N$) die Pte gespeicherte Probe ist und P eine Zahl ist, die größer oder gleich einer voreingestellten Schwellenzahl ist, Erzeugen (124) eines Auslösesteuerlogiksignals; oder
   • falls die Probe ($V_N$) die Pte gespeicherte Probe ist und P eine Zahl ist, die kleiner ist als die voreingestellte Schwellenzahl, Erzeugen (125) eines Nichtauslösesteuerlogiksignals und dann Wiederholen des Verarbeitungsvorgangs mit einer neuen Probe $V_{N+1}$.

**11.** Elektronische Schutzvorrichtung nach Anspruch 10, **dadurch gekennzeichnet, dass** der Verarbeitungsvorgang auch einen Schritt beinhaltet, bei dem im Voraus eine voreingestellte Wartezeit lang eine Prüfung erfolgt, ob eine Probe, die einen zweiten Durchgang des Reststroms durch Null anzeigt, nach der Probe ($V_N$) erhalten wurde.

**12.** Elektronische Schutzvorrichtung nach Anspruch 9, **dadurch gekennzeichnet, dass** der Verarbeitungsvorgang die folgenden Schritte aufweist:

• falls sich die Probe ($V_N$) innerhalb des zweiten Bereichs von Werten (103) befindet, Ausführen des dritten Berechnungsvorgangs, Erzeugen (122) eines Nichtauslösesteuerlogiksignals und Ausführen des Verarbeitungsvorgangs mit einer neuen Probe $V_{N+1}$.

**13.** Verfahren zum Erfassen von Erdschlussströmen in einer Niederspannungsstromleitung (5), **dadurch gekennzeichnet, dass** sie die folgenden Phasen aufweist:

a) Erhalten eines Sensorsignals (21), das einen Reststrom zwischen zumindest einem Paar von Leitern auf der Stromleitung anzeigt; und
b) Ausführen einer Analog-Digital-Wandlung des Sensorsignals, um eine Reihe (ID) an Proben ($V_N$) zu erhalten, die den derzeitigen Trend des Reststroms anzeigen; und
c) Ausführen eines Digitalverarbeitungsvorgangs (10) mit der Reihe (ID) an Proben ($V_N$), um Informationen (11) über die Periode der Reihe von Proben und über die Amplitudendynamik der Reihe von Proben mit Bezug auf einen voreingestellten Referenzwert ($ID_0$) zu erhalten.

**Revendications**

**1.** Dispositif de protection électronique (1) contre les courants de fuite sur une ligne électrique à basse tension (5), qui comprend :

- au moins une paire de contacts électriques (6), reliés électriquement à ladite ligne électrique et adaptés pour être mutuellement reliés à ou séparés les uns des autres ; et
- un moyen de détection (2) destiné à détecter un courant résiduel entre au moins deux conducteurs (phase et neutre) sur ladite ligne électrique, et à générer un signal de détection (21), qui indique la tendance instantanée dudit courant résiduel ; et
- un moyen électronique (3), électriquement relié audit moyen de détection, et destiné à générer un signal de disjonction de sortie (22) sur la base de la tendance dudit courant résiduel ; et
- un moyen d'actionnement (4) destiné à séparer lesdits contacts électriques sur la base dudit signal de disjonction de sortie, afin de couper ligne électrique;
**caractérisé en ce que** ledit moyen électronique comprend un moyen de traitement numérique (30) qui comprend au moins :
- un premier moyen informatisé (301) destiné à effectuer une conversion analogique/numérique dudit signal de détection, de façon à obtenir une série (ID) d'échantillons ($V_N$), qui indique la tendance instantanée dudit courant résiduel ; et
- un second moyen informatisé (302) destiné à exécuter une procédure de traitement numérique (10) sur lesdits échantillons ($V_N$) afin d'obtenir des informations (11) sur la période de ladite série d'échantillons et sur la dynamique d'amplitude de ladite série d'échantillons par rapport à une valeur de référence prédéfinie ($ID_0$), un signal logique de commande (IC) étant généré sur la base des informations acquises à l'aide de ladite procédure de traitement.

**2.** Dispositif de protection électronique selon la revendication 1, **caractérisé en ce que** ladite procédure de traitement numérique comprend une première procédure comparative (101) destinée à vérifier si un échantillon ($V_N$) se trouve sur une première plage de valeurs prédéfinie ($ID_{0max}$ - $ID_{0min}$) qui indique le passage dudit courant résiduel par le zéro.

**3.** Dispositif de protection électronique selon une ou plusieurs des revendications précédentes, **caractérisé en ce que** ladite procédure de traitement comprend une seconde procédure comparative (102) destinée à vérifier si un échantillon ($V_N$) se trouve sur une seconde plage de valeurs prédéfinie ($ID_{Tmax}$ - $ID_{Tmin}$) qui indique une amplitude autorisée maximale pour ledit courant résiduel.

**4.** Dispositif de protection électronique selon une ou plusieurs des revendications précédentes, **caractérisé en ce que** ladite procédure de traitement comprend une troisième procédure de calcul (103) destinée à déterminer une valeur incrémentale ($\Sigma_N{}^2$) liée à un échantillon ($V_N$), ladite valeur incrémentale correspondant à la somme des racines carrées des échantillons acquis, comptée à partir d'un premier échantillon ($V_0$) qui indique un premier passage dudit courant résiduel par le zéro.

**5.** Dispositif de protection électronique selon la revendication 4, **caractérisé en ce que** ladite troisième procédure de calcul détermine une valeur d'examen ($RMS^2$) liée à une période ($T_{ID}$) de ladite série (ID) d'échantillons ($V_N$), ladite valeur d'examen étant calculée sur la base de ladite valeur incrémentale.

**6.** Dispositif de protection électronique selon les revendications précédentes, **caractérisé en ce que** ladite procédure de traitement comprend les étapes suivantes :

- l'acquisition (111) d'un échantillon ($V_N$) à partir de ladite série d'échantillons ; et
- l'exécution (112) de ladite première procédure comparative (101).

**7.** Dispositif de protection électronique selon la revendication 6, **caractérisé en ce que** ladite procédure de traitement comprend les étapes suivantes :

- si ledit échantillon $V_N$ se trouve sur ladite première plage de valeurs prédéfinie ($ID_{0max}$ - $ID_{0min}$), le calcul (113) de la valeur incrémentale $\Sigma_N^2$ liée audit échantillon ($V_N$) à l'aide de ladite première procédure de calcul ; et
- si ledit échantillon ($V_N$) indique un troisième passage dudit courant résiduel par le zéro, le calcul (114) de la valeur d'examen $RMS^2$ liée audit échantillon ($V_N$) à l'aide de ladite première procédure de calcul ; ou
- si ledit échantillon $V_N$ n'indique pas un troisième passage dudit courant résiduel par le zéro, la génération (117) d'un signal logique de commande de non-disjonction et l'exécution de ladite procédure de traitement sur un nouvel échantillon $V_{N+1}$.

**8.** Dispositif de protection électronique selon la revendication 7, **caractérisé en ce que** ladite procédure de traitement comprend les étapes suivantes :

- si ladite valeur d'examen $RMS^2$ dépasse une valeur de seuil prédéfinie, la génération (115) d'un signal logique de commande de disjonction ; ou
- si ladite valeur d'examen $RMS^2$ ne dépasse pas ladite valeur de seuil prédéfinie, la génération (116) d'un signal logique de commande de non-disjonction et l'exécution de ladite procédure de traitement sur un nouvel échantillon $V_{N+1}$.

**9.** Dispositif de protection électronique selon la revendication 6, **caractérisé en ce que** ladite procédure de traitement comprend les étapes suivantes :

- si ledit échantillon $V_N$ ne se trouve pas sur ladite première plage de valeurs prédéfinie ($ID_{0max}$ - $ID_{0min}$), l'exécution (121) de ladite seconde procédure comparative (102).

**10.** Dispositif de protection électronique selon la revendication 9, **caractérisé en ce que** ladite procédure de traitement comprend les étapes suivantes :

- si ledit échantillon ($V_N$) ne se trouve pas sur ladite seconde plage de valeurs prédéfinie ($ID_{Tmax}$ - $ID_{Tmin}$), la mémorisation (123) dudit échantillon ($V_N$) ; et
- si ledit échantillon ($V_N$) est le $P^{ième}$ échantillon mémorisé, et si P est un nombre égal ou supérieur à un seuil prédéfini, la génération (124) d'un signal logique de commande de disjonction ; ou
- si ledit échantillon ($V_N$) est le $P^{ième}$ échantillon mémorisé, et si P est un nombre inférieur audit seuil prédéfini, la génération (125) d'un signal logique de commande de non-disjonction et la répétition de ladite procédure de traitement sur un nouvel échantillon $V_{N+1}$.

**11.** Dispositif de protection électronique selon la revendication 10, **caractérisé en ce que** ladite procédure de traitement implique également une étape de vérification à l'avance, pendant une durée d'attente prédéfinie, du fait qu'un échantillon qui indique un second passage dudit courant résiduel par le zéro ait été acquis ou non après ledit échantillon ($V_N$).

**12.** Dispositif de protection électronique selon la revendication 9, **caractérisé en ce que** ladite procédure de traitement comprend les étapes suivantes :

- si ledit échantillon ($V_N$) se trouve sur ladite seconde plage de valeurs prédéfinie (103), l'exécution de ladite troisième procédure de calcul, la génération (122) d'un signal logique de commande de non-disjonction, et l'exécution de ladite procédure de traitement sur un nouvel échantillon $V_{N+1}$.

**13.** Procédure de détection de courants de fuite sur une ligne électrique à basse tension (5), **caractérisée en ce qu'**elle comprend les phases suivantes :

a) l'acquisition d'un signal de détection (21) qui indique un courant résiduel entre au moins deux conducteurs sur ladite ligne électrique ; et
b) l'exécution d'une conversion analogique/numérique sur ledit signal de détection afin d'obtenir une série (ID) d'échantillons ($V_N$) qui indiquent la tendance instantanée dudit courant résiduel ; et
c) l'exécution d'une procédure de traitement numérique (10) sur ladite série (ID) d'échantillons ($V_N$) afin d'obtenir des informations (11) sur la période de ladite série d'échantillons et sur la dynamique d'amplitude de ladite série d'échantillons, par rapport à une valeur de référence prédéfinie ($ID_0$).

Fig. 1

Fig. 2

Fig. 3

Fig. 4

Fig. 5A

Fig. 5B

Fig. 5C

$V_N \equiv V_0$

$V_N \equiv V_S$

$V_N \equiv V_L$

EP 2 208 271 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2318002 A